# EUROPEAN PATENT SPECIFICATION

(11) **EP 2 182 691 B1**
(45) Date of publication and mention of the grant of the patent: **28.11.2012**
(21) Application number: 08773122.0
(22) Date of filing: 07.07.2008
(51) Int. Cl.: H04W 36/00, H04L 29/06

(54) **DOMAIN TRANSFER METHOD AND DOMAIN TRANSFER FUNCTION**
VERFAHREN FÜR DOMAIN TRANSFER UND DOMAIN TRANSFER FUNCTION
PROCÉDÉ DE TRANSFERT DE DOMAINE ET FONCTION DE TRANSFERT DE DOMAINE

(30) Priority: 20.07.2007 CN 200710129980
(43) Date of publication of application: 05.05.2010
(73) Proprietor: Huawei Technologies Co., Ltd., Longgang District, Shenzhen Guangdong 518129 (CN)
(72) Inventor: LONG, Shuiping, Shenzhen Guangdong 518129 (CN); JIN, Hui, Shenzhen Guangdong 518129 (CN)
(74) Representative: Thun, Clemens
(86) International application number: PCT/CN2008/071567
(87) International publication number: WO 2009/012685

(56) References cited:
- CN-A- 1 856 162
- CN-A- 1 882 119
- 3GPP: "3rd Generation Partnership Project;Technical Specification Group Services and System Aspects;IP Multimedia System (IMS) centralized services(Release 8)" 2 June 2007 (2007-06-02), 3GPP DRAFT; 23892-100, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , XP050209110 [retrieved on 2007-06-02] * paragraphs [3.1.], [5.2.3.], [6.5.2.4.3.], [6.6.2.4.3.], [6.7.2.4.3.] *
- NORTEL ET AL: "I1-ps & I1-cs-AS: Domain Transfers - session coordination" 3GPP DRAFT; S2-58-15 S2-072688 - I1-PS & I1-CS DT SESSION COORDINATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Orlando; 20070619, 19 June 2007 (2007-06-19), XP050260561 [retrieved on 2007-06-19]
- NORTEL: "VCC Emergency Call Support - Architecture Alternative" 3GPP DRAFT; S2-072812, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Orlando; 20070702, 2 July 2007 (2007-07-02), XP050260333 [retrieved on 2007-07-02]
- "3rd Generation Partnership Project; Technical Specification Group Services and System Aspects; Voice Call Continuity (VCC) between Circuit Switched (CS) and IP Multimedia Subsystem (IMS); Stage 2 (Release 7)" 3GPP STANDARD; 3GPP TS 23.206, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.3.0, 1 June 2007 (2007-06-01), pages 1-36, XP050363129
- '3rd Generation Partnership Project; Technical Specification Group Services and System Aspects; Centralized IMS Service Control (Release 8) 3GPP TR 23.nnn V0.0.1 3GPP SA WG2' 3GPP TECHNICAL REPORT 17 October 2006,

## Description

### Field of the Invention

The present invention relates to mobile communication technologies, and in particular, to a domain transfer method and a domain transfer function (DTF).

### Background of the Invention

The Universal Mobile Telecommunications System (UMTS) core network is an Internet Protocol (IP) backbone network developed on the basis of the Global System for Mobile Communications (GSM) and General Packet Radio Service (GPRS). Logically, a UMTS network may be divided into a Circuit-Switched (CS) domain and a Packet-Switched (PS) domain. The CS domain is the CS core network of the UMTS, supporting circuit data services; the PS domain is the PS core network of the UMTS, supporting packet data services and certain multimedia services. In a UMTS network, signaling control and data transmission are separate.

Currently, mobile communication networks are dominated by CS systems, including GSM and Code Division Multiple Access (CDMA) networks. Mobile network operators have established complete and abundant service platforms based on the CS system, where a Mobile Switching Centre (MSC) routes calls and executes service logics. In addition, the MSC can work with other application servers, such as a ringback tone server, to provide corresponding services. However, because the service provisioning of CS networks requires support of the visited MSC, the development of services is restricted.

The IP Multimedia Subsystem (IMS) is a subsystem laid over the PS domain by the 3rd Generation Partnership Project (3GPP). In an IMS, the bearer for control signaling and media transmission is the IP packet domain and the service control protocol is the Session Initiation Protocol (SIP). With the simplicity, scalability and ease of media combination of SIP, service management, session control and bearer access are independent of each other so as to provide rich multimedia services. In an IMS, because all services are provided by the home network independently of the visited location, new multimedia services are easy to deploy. The IMS allows a terminal to access the IMS network via various PS access networks to use IMS multimedia services. The most commonly used PS access network is the IP capability access network (IP-CAN), such as GPRS. This means the IMS is a service platform built over an IP-CAN. Compared with a CS network, an IP-CAN provides larger bandwidths and supports richer services.

Major function entities in an IMS include: Call Session Control Function (CSCF), adapted to control user registration and implement session control; Home Subscriber Server (HSS), adapted to manage subscription data in a centralized manner; Application Server (AS), adapted to control service logics; and Policy Decision Function (PDF), adapted to manage Quality of Service (QoS). The initial Filter Criteria (iFC) service trigger architecture of the IMS is simple, efficient in service processing, and independent of the specific service logic. The iFC architecture can connect to ASs in series to realize a simple combination of services. This provides effective support for the separation of service and control, which is a core characteristic of the IMS network.

Currently, all standardization organizations carry out researches on the Next Generation Network (NGN) on the basis of the IMS. With the deployment of the IMS-based NGN systems, multiple service networks, including IMS, NGN, CS domain, and Internet will coexist. With its strengths, the IMS will attract more and more services and may finally replace NGN and CS networks. Because it is impossible to complete IMS deployment and impossible to change all CS terminals to IMS terminals in a short time, CS networks will coexist with IMS networks in a long time. To cut the cost for operation of both CS and IMS platforms and avoid reconstruction of both service platforms when a new service is deployed, functions of the CS platform may be handed over to the IMS network to unify the two platforms, known as IMS Centralized Services (ICS).

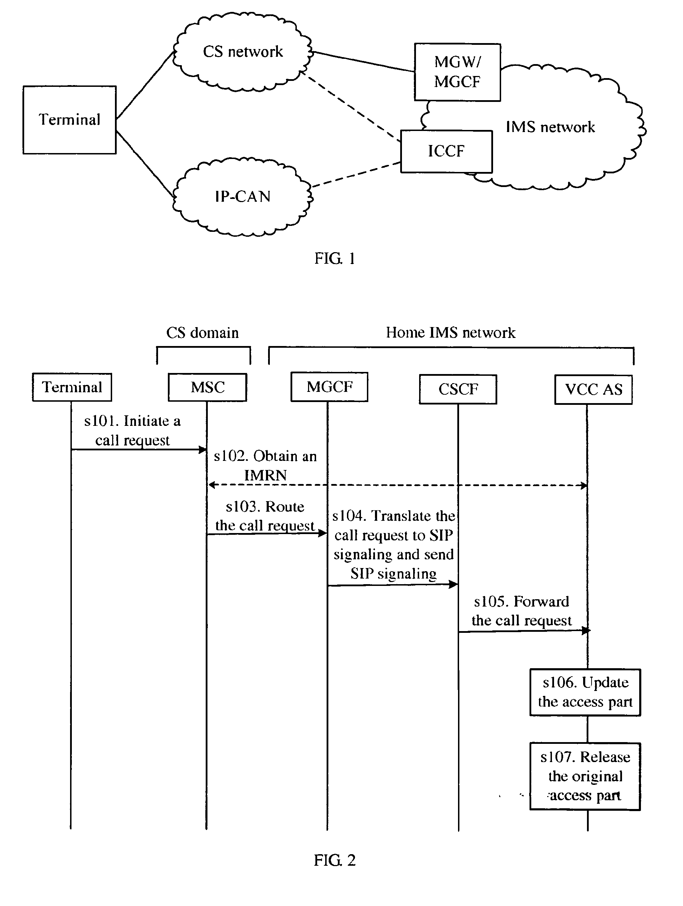

To establish an IMS call, the ICS requires the CS network to bear voice media and an AS in the IMS to provide the call service. FIG. 1 shows an ICS architecture in a prior art. In FIG. 1, the Media Gateway (MGW) and MGW Control Function (MGWF) are interworking functions between the CS network and the IMS network to translate signaling and media; the IMS CS Control Function (ICCF) is an AS located in the home network of a user, and provides ICS control functions including adaptation of CS signaling to IMS SIP signaling and acting as a user agent to set up and control an IMS session in the IMS domain on behalf of the user. Between a terminal and the ICCF, session control messages are transmitted over a signaling channel independent of the CS call. This signaling channel is known as the IMS CS Control Channel (ICCC). A CS call is set up between the terminal and the ICCF to implement the CS bearer.

Voice Call Continuity (VCC) enables a voice signal to transfer between the CS domain and the IMS domain. A Voice Call Continuity Application Server (VCC AS) provides the Anchor function, Domain Selection Function (DSF) and Domain Transfer Function (DTF) to realize VCC and manage the transfer between the CS domain and the IP-CAN.

As shown in FIG. 2, a procedure of transfer from the PS domain to the CS domain according to 3GPP 23.206 includes the following steps:

Step s101: A terminal initiates a call request to the VCC AS via the CS domain. The call request is routed to the MSC in the CS domain and carries a VCC Domain Transfer Number (VDN). The VDN indicates that domain transfer is requested. The number is statically allocated to a user identification apparatus and stored in the user identification apparatus in advance. When domain transfer is initiated in the CS domain, the VDN is used as the called number.

Step s102: The MSC obtains from the VCC AS an IP Multimedia Routing Number (IMRN) for routing the transfer request from the CS domain to the VCC AS.

Step s103: The MSC routes the call request to the MGCF in the home IMS network according to the IMRN.

Step s104: The MGCF translates the call request to IMS SIP signaling according to the IMRN and sends the SIP signaling to the CSCF.

Step s 105: The CSCF forwards the call request to the VCC AS according to the IMRN.

Step s106: The VCC AS receives the call request and knows that the call request is a transfer request according to the VDN and that the terminal user requests transfer from the PS domain to the CS domain. The VCC AS updates the signaling from the terminal to the VCC AS in the original session to the access part of the CS domain.

Step s107: The VCC AS releases the original IP-CAN access part.

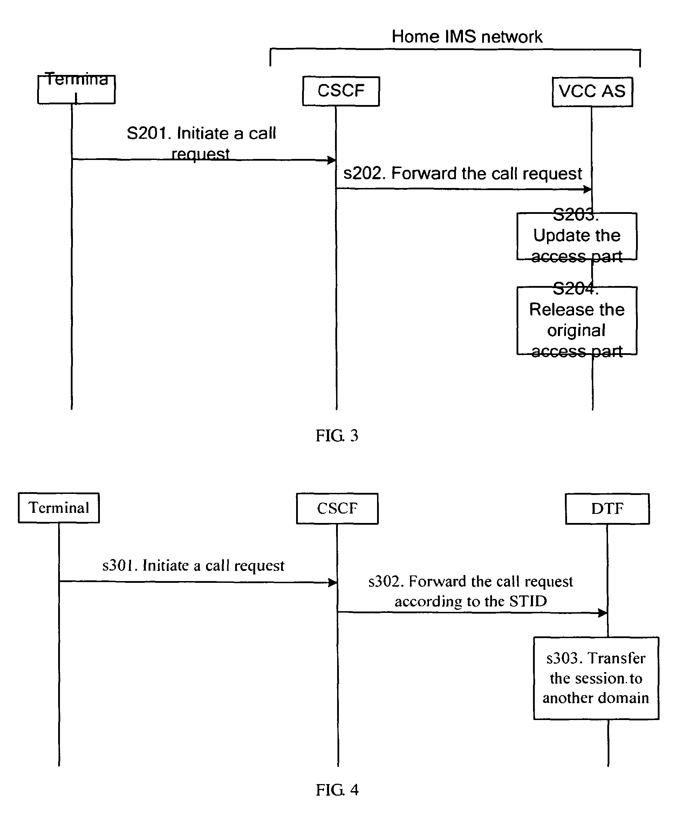

As shown in FIG. 3, a procedure of transfer from the CS domain to the PS domain according to 3GPP 23.206 includes the following steps:

Step s201: A terminal initiates a call request to the VCC AS via the IP-CAN. The call request is routed to the CSCF in the home IMS network and carries a VCC Domain Transfer URI (VDI), where URI is the abbreviation of Uniform Resource Identifier. The VDI indicates that domain transfer is required. The identifier is allocated statically to a user identification apparatus and stored in the user identification apparatus in advance. The VDI is totally independent of the VDN. When domain transfer is initiated in the PS domain, the VDI is used as the called number.

Step s202: The CSCF forwards the call request to the VCC AS according to the VDI.

Step s203: The VCC AS receives the call request and knows that the call request is a transfer request according to the VDI carried in the request and that the terminal user requests transfer from the CS domain to the PS domain. The VCC AS updates the CS domain access part in the original session to the IP-CAN access part.

Step s204: The VCC AS releases the original CS domain access part.

When implementing the present invention, the inventor finds the CS-PS domain transfer method in the prior art is subject to the following weaknesses:

1. Because VDN and VDI are configured in the user identification apparatus statically in advance, each user identification apparatus stores and only stores one pair of VDN and VDI. Every time when the terminal requests domain transfer, the same VDN or VDI is used as the called number to initiate a call request to the VCC AS. When the terminal has sessions with multiple terminals, the VCC AS does not know for which session the terminal requests the domain transfer according to the VDN or VDI and thus the correctness and effectiveness of the domain transfer are not guaranteed. Moreover, because there is only one VDN/VDI pair, the terminal cannot set up sessions with multiple other terminals simultaneously. This limits the diversification of the network services.

2. Both VDN and VDI indicate that a new call request is a domain transfer request. Because a traditional terminal only carries digits but not other characters when initiating a call request in the CS domain, VDN and VDI are respectively adopted to indicate a domain transfer call request. In the case of an ICS terminal, however, because an ICCC can carry characters other than digits to send indication information to the ICCF, the function of VDN and VDI can be integrated to one identifier. The simultaneous allocation of VDN and VDI causes redundancy and wastes the VDN and VDI resources.

3. During the transfer from the IMS domain to the CS domain, because the VDN cannot be used for routing, the VCC AS must dynamically allocate an IMRN for the current domain transfer. This consumes time and therefore reduces the efficiency of domain transfer. Besides, the transfer request has to carry both the VDN and the IMRN, and as a result, number resources are wasted.

4. A VDN/VDI pair is statically allocated to the user identification apparatus of every user while not every user requests domain transfer at any time. As a result, the static allocation of VDN/VDI not only unnecessarily occupies the storage space of the user identification apparatus, but also wastes number resources of the network.

Document D1 ("IP Multimedia System (IMS) Centralized services (Release 8)", 3GPP TR 23.892 V1.0.0., XP 050209110) relates to results of the feasibility study into the architectural requirements and alternatives for the delivery of consistent services to the user mainly via IMS centralized services regardless of the attached access type. It demonstrates that Domain Transfer functions of TS 23.206[3] shall be used to enable service continuity of IMS sessions between PS and CS access for sessions established by ICS.

### Summary of the Invention

Embodiments of the invention provide a domain transfer method and a DTF so that when a session is initiated, a DTF allocates a Session Transfer Identifier (STID) dynamically for the session to identify the session and a domain transfer request of the session. A multimedia session is transferred from one domain to another according to the STID so as to save number resources in a network, and guarantee the correctness and effectiveness of domain transfer. A terminal is able to maintain sessions with multiple terminals, which promotes the diversification of network services.

A domain transfer method includes:
receiving a call request from a terminal, where the request carries a STID allocated by a DTF in advance for identifying a session and domain transfer of the session; and
transferring, by the DTF the session to another domain according to the STID,
wherein the step of receiving further comprises:
receiving, by a CSCF, the call request initiated by the terminal, wherein the session transfer identifier is used by the terminal as a called number; and
routing, by the CSCF, the call request to the DTF according to the session transfer identifier.

A DTF includes:
a transceiver module, adapted to receive a call request obtain a STID carried in the call request for domain transfer of a multimedia session, and send an allocated STID; and
a transfer management module, adapted to transfer the multimedia session between a CS domain and a PS domain according to the STID carried in the call request,
wherein the received call request is:
   received by a CSCF wherein the call request is initiated by a terminal and wherein the session transfer identifier is used by the terminal as a called number; and
   routed by the CSCF to the DTF according to the session transfer identifier.

In the embodiments of the invention, when a session is initiated, a DTF allocates a STID that uniquely identifies the session and domain transfer of the session for the terminal that initiates the session. When the terminal has set up multiple sessions with other terminals, the DTF is also able to know the session that requires domain transfer according to the STID. This guarantees the correctness and effectiveness of domain transfer, while allowing the terminal to maintain multiple sessions with other terminals, so as to promote the diversification of the network services.

One STID is used to indicate that a call request initiated by a terminal between the CS domain and the PS domain is a domain transfer request. Compared with the prior art where a VDN/VDI pair is adopted, the method in the present invention avoids number redundancy and saves network resources. In addition, routing of the domain transfer request is implemented with the STID without the need to allocate an IMRN for the domain transfer request so that network resources are further saved. The time for domain transfer is thereby shorter and the efficiency of domain transfer is higher.

When a session is initiated, the DTF allocates a STID dynamically for the terminal that initiates the session without the need to store the STID in a user identifying module in advance. Compared with the static configuration of VDN/VDI in the prior art, the method in the present invention saves the storage space of the user identification apparatus.
In the following, the DTF is also identified as a server.

### Brief Description of the Drawings

FIG. 1 shows an ICS architecture in a prior art;

FIG. 2 shows a procedure of transfer from the PS domain to the CS domain according to 3GPP 23.206 in a prior art;

FIG. 3 shows a procedure of transfer from the CS domain to the PS domain according to 3GPP 23.206 in a prior art;

FIG. 4 shows a procedure of a domain transfer method according to a first embodiment of the invention;

FIG. 5 shows a procedure of dynamic STID allocation according to a first embodiment of the invention;

FIG. 6 shows the procedure of dynamic STID allocation according to a second embodiment of the invention;

FIG. 7 shows a procedure of dynamic STID allocation according to a third embodiment of the invention;

FIG. 8 shows a procedure of dynamic STID allocation according to a fourth embodiment of the invention;

FIG. 9 shows a procedure of a domain transfer method according to a second embodiment of the invention;

FIG. 10 shows a procedure of a domain transfer method according to a third embodiment of the invention;

FIG. 11 shows the structure of a server according to a first embodiment of the invention;

FIG. 12 shows the structure of a server according to a second embodiment of the invention;

FIG. 13 shows the structure of a controller according to a first embodiment of the invention; and

FIG. 14 shows the structure of a controller according to a second embodiment of the invention.

### Detailed Description of the Embodiments

In embodiments of the present invention, when a session is initiated, a server dynamically allocates a Session Transfer Identifier (STID) that uniquely identifies the session and the domain transfer for a terminal that initiates the call request. Session routing and domain transfer are based on the STID.

The technical solution of the present invention is hereinafter described in detail with reference to the accompanying drawings and exemplary embodiments.

As shown in FIG. 4, a domain transfer method in a first embodiment of the invention includes the following steps:

Step s301: A terminal uses a STID as a called number and initiates a call request to a CSCF, where the STID is allocated by a server when a session is initiated to uniquely identify the session and its domain transfer.

The server may be a Domain Transfer Function (DTF) that is adapted to provide continuity of multimedia including voice. Whether originated or terminated by the terminal, a call must be anchored by the DTF. The DTF also works as a Back-To-Back User Agent (B2BUA) and initiates new call signaling to the called party. The DTF also allocates the STID for a user and stores the STID for domain transfer.

Step s302: The CSCF routes the call request to the DTF.

Step s303: The DTF knows that the call request is a request for domain transfer for the session identified by the STID according to the STID in the call request, and performs domain transfer for the session.

In the embodiment of the invention, when a session is initiated, the server dynamically allocates a STID that uniquely identifies the session and the domain transfer for the terminal that initiates the call request. This guarantees the correctness and effectiveness of domain transfer. Moreover, the terminal can set up sessions with multiple other terminals simultaneously so as to promote the diversification of the network services. Because only one STID is required to complete the domain transfer, network resources are saved. In addition, it is unnecessary to store the STID in the user identifying module of the terminal, and thus the storage space of the user identification apparatus is saved.

Before the domain transfer shown in FIG. 4, the DTF dynamically allocates a STID for the terminal. The STID may consist of digits and/or a string. For example, when the terminal user is a CS service user, the DTF allocates a STID made up of digits, such as a TEL URI; when the terminal user is an ICS or PS service user, the DTF may allocate a STID made of characters other than digits, such as a SIP URI.

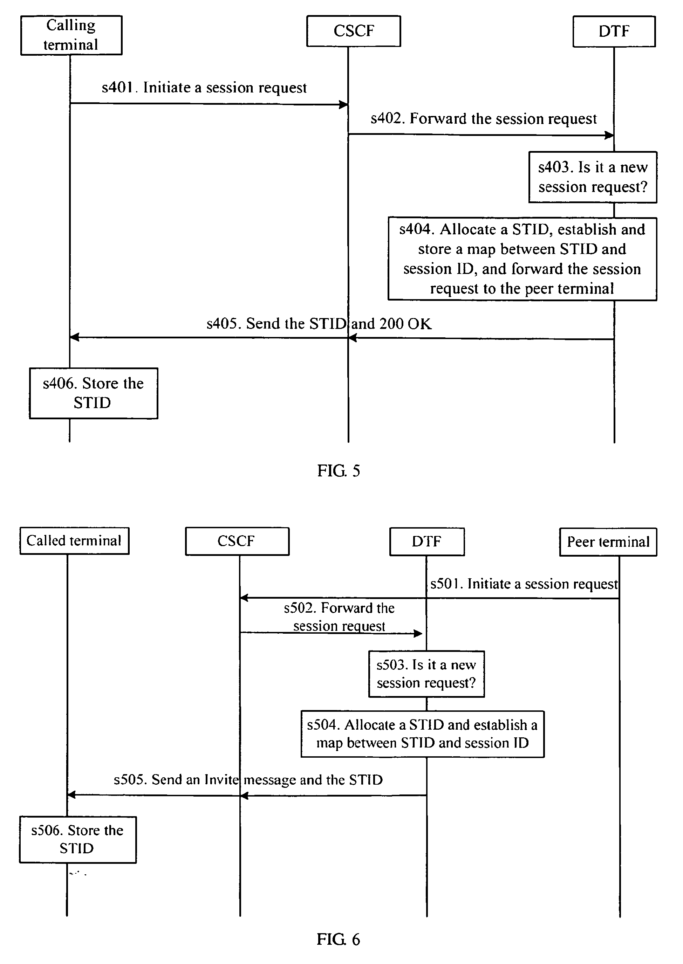

FIG. 5 shows a procedure of dynamic STID allocation according to a first embodiment of the invention, where a terminal initiates a session request and signaling is transmitted via the PS domain. The procedure in this embodiment includes:

Step s401: A calling terminal initiates a multimedia session request destined for a peer terminal, the called terminal, to a CSCF.

Step s402: The CSCF forwards the session request to a DTF.

Step s403: The DTF determines whether the session request is intended to initiate a new session. If it is a new session request, the procedure proceeds to step s404; otherwise, the DTF does not perform the subsequent STID allocation for the session.

The determination process is as follows: The DTF checks whether the called address in the session request is a STID or a user identifier or URI of the peer terminal; if the called address is a user identifier or URI of the peer terminal, the DTF identifies the session request as a new session request; if the called address is a STID, the DTF determines that the session request is not a new session request.

Step s404: The DTF allocates a STID that identifies the session and its later domain transfer for the calling terminal. The DTF also establishes and stores a map between the STID and the session identified by the STID. In addition, the DTF forwards the session request to the peer terminal according to the user identifier of the peer terminal carried in the session request.

When the DTF allocates the STID for the calling terminal, the DTF first determines the type of the terminal user. If the terminal user is a CS service user, the DTF may allocate a STID made up of digits, such as a TEL URI; if the terminal user is an ICS or PS service user, the DTF may allocate a STID made up of characters other than digits, such as a SIP URI.

Step s405: The DTF receives a 200 OK response from the peer terminal to the calling terminal, and forwards the STID and the 200 OK message to the calling terminal via the CSCF.

Specifically, the DTF may send the STID to the calling terminal by writing the STID in the 200 OK message, or another response message like 180 and 183, or an Invite message sent by another terminal.

The STID may be carried in a Contact header of the SIP message. A Contact header carrying a STID is as follows: Contact:<STID>;isSTID.

Step s406: The calling terminal stores the STID. If the calling terminal performs domain transfer as soon as it receives the STID, the STID may not be stored.

FIG. 6 shows a procedure of dynamic STID allocation in a second embodiment of the invention, where a terminal terminates a session request and signaling is transmitted via the PS domain. The procedure in this embodiment includes the following steps:

Step s501: A peer terminal sends an Invite message to a CSCF to initiate a session request destined for the called terminal in the PS domain.

Step s502: The CSCF forwards the session request to a DTF.

Step s503: The DTF determines whether the session request is intended to initiate a new session. If it is a new session request, the procedure proceeds to step s504; otherwise, the DTF does not perform the subsequent STID allocation. The determination process is the same as step s404.

Step s504: The DTF allocates a STID for the session to identify the session and its later domain transfer. The DTF also establishes and stores a map between the STID and the session identified by the STID.

Step s505: The DTF forwards the Invite message and the STID to the called terminal via the CSCF. Specifically, the DTF may send the STID to the called terminal by writing the STID in the Invite message, or another response message like 180, 183, or 200 OK.

Step s506: The called terminal stores the STID. If the called terminal performs domain transfer as soon as it receives the STID, the STID may not be stored.

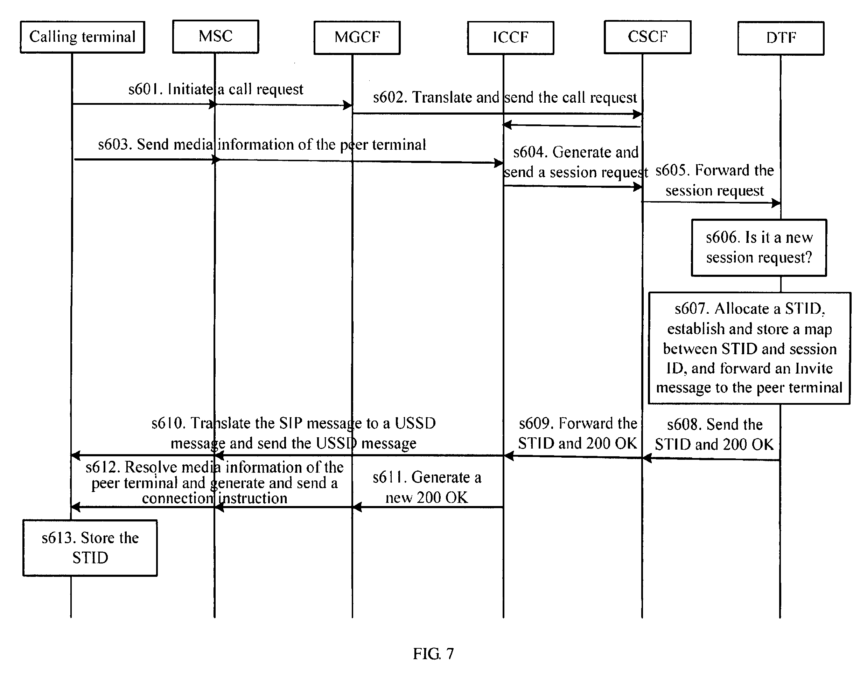

FIG. 7 shows a procedure of dynamic STID allocation in a third embodiment of the invention, where an ICS terminal initiates a session request and signaling is transmitted via the CS domain. The procedure in this embodiment includes the following steps:

Step s601: The calling terminal in the CS domain sends a call request to an ICCF to set up a bearer path between the ICCF and the CS domain. The call request is forwarded to an MGCF via an MSC.

Step s602: The MGCF translates the CS signaling to a SIP Invite message and sends the Invite message to the ICCF. After steps s601 and s602, a bearer control signaling channel is set up.

Step s603: The calling terminal sends media information of the peer terminal to the ICCF in the form of Unstructured Supplementary Service Data (USSD) for session control via an ICCC. This step generates session control signaling.

Step s604: The ICCF integrates the bearer control signaling and the session control signaling to generate a new Invite message, a session request, destined for the peer terminal and sends the new Invite request to a CSCF.

Step s605: The CSCF forwards the session request to a DTF.

Step s606: The DTF determines whether the session request is intended to initiate a new session. If it is a new session request, the procedure proceeds to step s607; otherwise, the DTF does not perform the subsequent STID allocation.

Step s607: The DTF allocates a STID that identifies the session and its later domain transfer for the calling terminal. The DTF also establishes and stores a map between the STID and the session identified by the STID. In addition, the DTP forwards the Invite message to the peer terminal according to the user identifier of the peer terminal carried in the session request.

Step s608: The DTF receives a 200 OK response from the peer terminal to the calling terminal, and forwards the STID and the 200 OK message to the CSCF.

Specifically, the DTF may send the STID to the CSCF by writing the STID in the 200 OK message, or another response message like 180 and 183, or an Invite message sent by another terminal.

Step s609: The CSCF forwards the STID and the 200 OK response to the ICCF.

Step s610: The ICCF translates the STID and the 200 OK from SIP signaling to USSD information and sends the USSD information to the calling terminal via the MSC.

Step s611: The ICCF generates a new 200 OK message according to the received 200 OK and sends the new 200 OK to the MGCF.

Step s612: The MGCF resolves the media information of the peer terminal from the new 200 OK message and generates a CS connection instruction, and sends the connection instruction to the calling terminal. Steps s611 and s612 are carried out simultaneously with step s610.

Step s613: The calling terminal stores the STID. If the calling terminal performs domain transfer as soon as it receives the STID, the STID may not be stored.

In step s608 as shown in FIG. 7, if the DTF sends the STID to the CSCF by writing the STID in the 200 OK message, or another response message, the ICCF needs to translate the SIP signaling to CS signaling in step s610. That is, the ICCF needs to resolve the STID from the Contact header, write the STID in the USSD, and send the USSD to the calling terminal via the MSC.

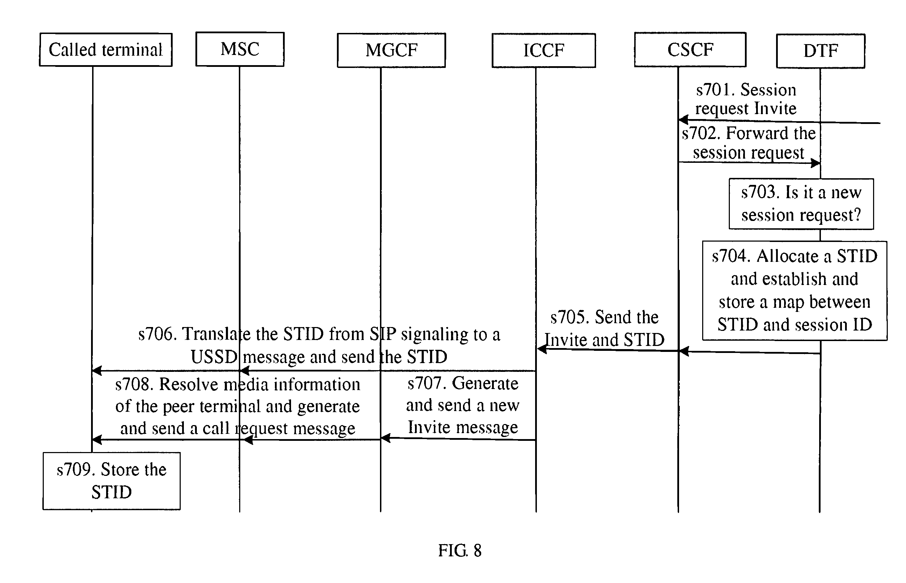

FIG. 8 shows a procedure of dynamic STID allocation in a fourth embodiment of the invention, where an ICS terminal terminates a session request and signaling is transmitted via the CS domain. The procedure in this embodiment includes the following steps:

Step s701: A peer terminal sends an Invite message to initiate a session request.

Step s702: The CSCF forwards the session request to a DTF.

Step s703: The DTF determines whether the session request is intended to initiate a new session. If it is a new session request, the procedure proceeds to step s704; otherwise, the DTF does not perform the subsequent STID allocation. The determination process is the same as step s404.

Step s704: The DTF allocates a STID for the session to identify the session and its later domain transfer. The DTF also establishes and stores a map between the STID and the session identified by the STID.

Step s705: The DTF forwards the Invite message and the STID to an ICCF via a CSCF. Specifically, the DTF may send the STID to the ICCF via the CSCF by writing the STID in the Invite message, or another response message like 180, 183, or 200 OK, or an Invite message sent by another terminal.

Step s706: The ICCF translates the SIP message to a USSD message and sends the USSD message to the called terminal via an MSC.

Step s707: The ICCF generates a new Invite message according to the received Invite message and sends the new Invite message to the MGCF.

Step s708: The MGCF resolves media information of the peer terminal from the new Invite message, generates a call request message of the CS domain, and sends the call request message to the called terminal via the MSC. Steps s707 and s708 are carried out simultaneously with step s6706.

Step s709: The called terminal stores the STID. If the called terminal performs domain transfer as soon as it receives the STID, the STID may not be stored.

In step s705, if the DTF sends the STID to the ICCF by writing the STID in the Invite message or another response message, the ICCF needs to resolve the STID from the Contact header in step s706, write the STID in the USSD message, and send the USSD to the calling terminal via the MSC.

After the DTF allocates a dynamic STID for the terminal, the terminal can initiate domain transfer for the session identified by the STID.

In the embodiments of the dynamic STID allocation, specifically, in step s404, s504, s607, or s704, when the server allocates a STID for the session, the server may first determine, according to the terminal user information, whether the terminal user to receive the STID is a CS service user or an ICS user. If the terminal user is a CS service user, the server may allocate a STID made up of digits, such as a TEL URI, for the session; if the terminal user is an ICS user or a PS service user, the server may allocate a STID made up of characters other than digits, such as a SIP URI. In this way, digit number resources in the network are saved.

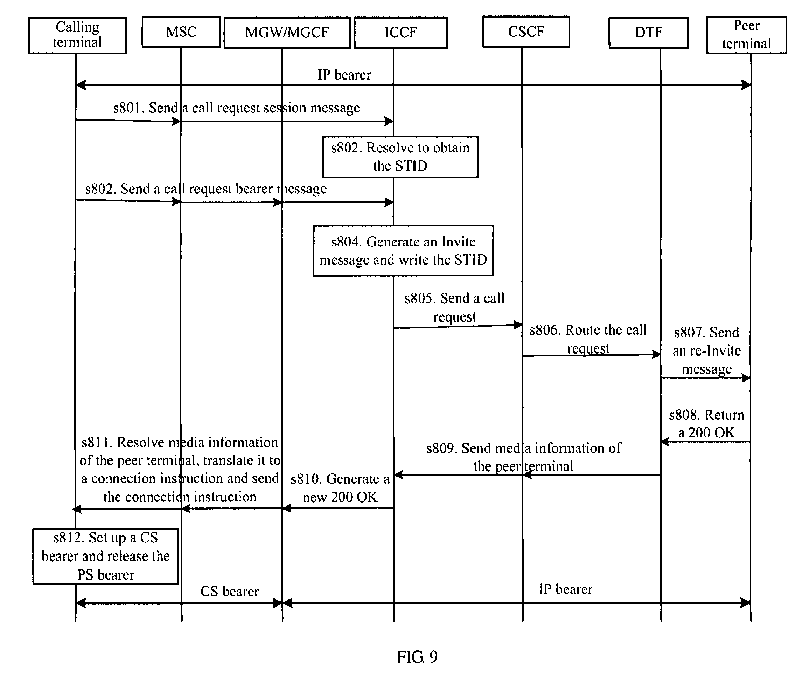

FIG. 9 shows a procedure of a domain transfer method in a second embodiment of the invention where a session is transferred from the PS domain to the CS domain. The procedure includes the following steps:

Step s801: A local terminal located in the CS domain of ICS initiates a call request session message destined for a peer terminal in the form of a USSD message via an ICCC to an ICCF by way of an MSC. The call request session message includes a STID.

Step s802: The ICCF resolves the STID from the USSD message.

Step s803: The local terminal sends a call request bearer message to the ICCF by way of the MSC. The call request bearer message includes media information, such as coding scheme, address, and port number information, of the local terminal. In addition, step s803 may be performed ahead of or simultaneously with steps s801 and s802.

Step s804: The ICCF integrates the call request session message sent in step s802 and the call request bearer message sent in step s803 to generate an Invite call request message, and writes the STID in the call request. Specifically, the ICCF may write the STID in the Request URI header of the Invite message.

Step s805: The ICCF sends the Invite message that carries the STID to a CSCF.

Step s806: The CSCF forwards the call request to a DTF.

Step s807: The DTF identifies the call request as a domain transfer request according to the STID carried in the Request URI header of the Invite message. The DTF sends a re-Invite message to the peer terminal. The re-Invite message carries the media information of the local terminal.

Step s808: The peer terminal returns a 200 OK response message to the DTF. The 200 OK message carries media information, such as coding scheme, address and port number, of the peer terminal.

Step s809: The DTF receives the 200 OK from the peer terminal to the local terminal and forwards the media information of the peer terminal to the ICCF via the CSCF.

Step s810: The ICCF generates a new 200 OK message according to the received 200 OK and sends the new 200 OK to the MGCF.

Step s811: The MGCF resolves the media information of the peer terminal from the new 200 OK, translates the SIP message to a CS connection instruction, and sends the connection instruction to the local terminal via the MSC.

Step s812: The local terminal receives the media information of the peer terminal and sets up a CS bearer with the MGW. The MGW sets up a PS bearer with the peer terminal. The previous PS bearer is released. Specifically, the previous PS bearer may be released by the local terminal or the MGW.

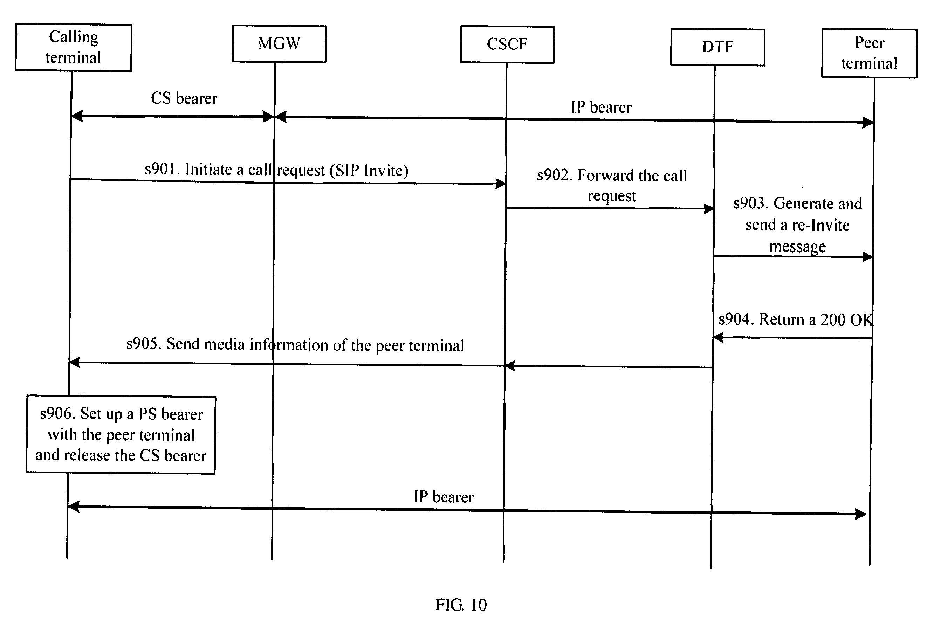

FIG. 10 shows a procedure of a domain transfer method in a third embodiment of the invention where a session is transferred from the CS domain to the PS domain. The procedure includes the following steps:

Step S901: A local terminal in the PS domain uses a STID as a called address to send a SIP Invite message to a CSCF. The Invite message carries media information such as coding scheme, IP address and port number, of the local terminal.

Step s902: The CSCF forwards the Invite message to a DTF according to the iFC stored by the CSCF.

Step s903: The DTF identifies the call request as a domain transfer request according to the STID carried in the Invite message. The DTF generates a re-Invite message and sends the re-Invite message to a peer terminal. The re-Invite message carries the media information of the local terminal.

Step s904: The peer terminal returns a 200 OK response message to the DTF. The 200 OK message carries media information, such as coding scheme, IP address and port number, of the peer terminal.

Step s905: The DTF receives the 200 OK from the peer terminal to the local terminal and forwards the media information of the peer terminal to local terminal via the CSCF.

Step s906: The local terminal receives the media information of the peer terminal and sets up a PS bearer with the peer terminal. The previous CS bearer between the local terminal and the MGW is released. Specifically, the previous CS bearer between the local terminal and the MGW is released by the local terminal or the MGW.

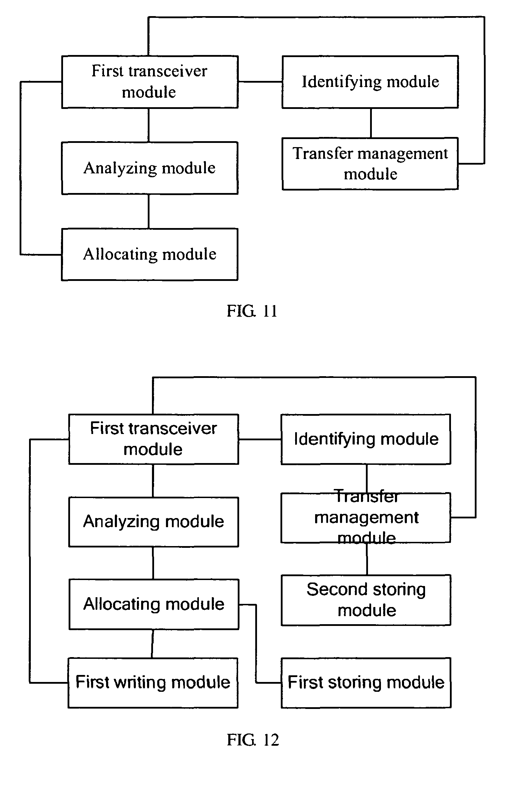

FIG. 11 shows the structure of a server in an embodiment of the invention. The server includes a first transceiver module, an analyzing module and an allocating module connected in sequence, an identifying module connected to the first transceiver module, and a transfer management module connected to the identifying module. The first transceiver module is adapted to receive a multimedia session request and a call request, obtain a STID carried in the call request for domain transfer of the multimedia session and send the STID to the identifying module, and transmit a STID allocated by the allocating module to a terminal. The analyzing module is adapted to analyze whether the multimedia session is a new session according to whether the multimedia session request carries a STID. The allocating module is adapted to allocate a STID for identifying the session and domain transfer of the session and send the STID to the first transceiver module when the multimedia session request is a new session request. Specifically, the allocating module may choose the type of STID to allocate for the session according to whether the terminal user is a CS service user or an ICS user. For example, when the terminal user is a CS service user, the allocating module allocates a STID in the form of digits; when the terminal user is an ICS user, the allocating module allocates a STID in the form of characters other than digits. The identifying module is adapted to identify whether the call request carries a STID according to whether the first transceiver module obtains a STID from the call request. The transfer management module is adapted to implement continuity of the multimedia session and transfer the multimedia session between the CS domain and the PS domain according to the call request when the call request carries a STID.

FIG. 12 shows the structure of a server in a second embodiment of the invention. Based on FIG. 11, the server shown in FIG. 12 further includes a first writing module, placed between the allocating module and the first transceiver module, connected respectively to the allocating module and the first transceiver module, and adapted to write the STID allocated for the new session in the Request URI header of a SIP message and send the SIP message to the first transceiver module; and a transceiver module, adapted to transmit the Request URI carrying the STID.

As shown in FIG. 12, the server may further include a first storing module, connected to the allocating module and adapted to store the STID.

Further, the server may include a second storing module, connected to the transfer management module and adapted to store a map between the STID and a multimedia session ID to help the transfer management module know the multimedia session that requires domain transfer according to the STID.

The server shown in FIG. 11 or FIG. 12 may work as a DTF to implement the STID allocation and domain transfer procedure in the present invention.

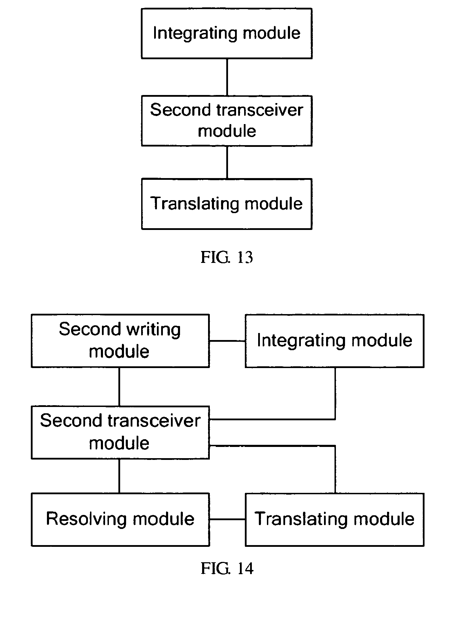

FIG. 13 shows the structure of a controller in a first embodiment of the invention. The controller includes a translating module, a second transceiver module, and an integrating module connected in sequence. The second transceiver module is adapted to forward a STID, receive session control signaling and bearer control signaling, a call request session message and a call request bearer message, send a call request generated by integrating the call request session message and the call request bearer message, and send a session request generated by integrating the session control signaling and bearer control signaling. The translating module is adapted to translate the SIP message that carries the STID to a USSD message. The integrating module is adapted to integrate the session control signaling and the bearer control signaling to generate the session request and integrate the call request session message and the call request bearer message to generate the call request.

FIG. 14 shows the structure of a controller in a second embodiment of the invention. Based on the controller shown in FIG. 13, the controller in this embodiment further includes a second writing module, placed between the second transceiver module and the integrating module, connected respectively to the second transceiver module and the integrating module, and adapted to write the STID in the Request URI header of the call request generated via integration and send the request to the second transceiver module.

Further, the controller may include a resolving module, placed between the second transceiver module and the translating module, connected respectively to the second transceiver module and the translating module, and adapted to resolve the STID from the URI header in the SIP message received by the second transceiver module and send the STID to the translating module.

In the embodiments of the invention, when a session is initiated, a server allocates a STID that uniquely identifies the session and domain transfer of the session for the terminal that initiates the session. When the terminal has set up multiple sessions with other terminals, the server is also able to know the session that requires domain transfer according to the STID. This guarantees the correctness and effectiveness of domain transfer and allows the terminal to maintain multiple sessions with other terminals, so as to promote the diversification of the network services.

In the embodiments of the invention, one identifier, STID, is used to indicate that a call request initiated by a terminal between the CS domain and the PS domain is a domain transfer request. Compared with the prior art where a VDN/VDI pair is adopted, the method in the present invention avoids number redundancy and saves network resources. In addition, routing of the domain transfer request is implemented with the STID without the need to allocate an IMRN for the domain transfer request so as to further save network resources. The time for domain transfer is thereby shorter and the efficiency of domain transfer is higher.

When a session is initiated, the server allocates a STID dynamically for the terminal that initiates the session without the need to store the STID in a user identifying module in advance. Compared with the static configuration of VDN/VDI in the prior art, the method in the present invention saves the storage space of the user identification apparatus.

Through the foregoing embodiments, it is understandable to those skilled in the art that the embodiments of the present invention may be implemented through software and a necessary general hardware platform or through hardware only. However, in most cases, software and a general hardware platform are preferred. Based on such understandings, the technical solution of the present invention or contributions to the prior art can be embodied by software products. The software products are stored in a storage medium and incorporate several instructions to instruct a computer device, for example, a personal computer, a server, or a network device, to execute the method provided by each embodiment of the present invention.

The foregoing embodiments are exemplary embodiments of the present invention only and not intended to limit the present invention.

## Claims

1. A domain transfer method, comprising:
receiving (s301, s302), a call request from a terminal, wherein the request carries a session transfer identifier allocated by a domain transfer function, DTF, in advance for identifying a session and domain transfer of the session; and
transferring (s303), by the DTF, the session to another domain according to the session transfer identifier;
wherein the step of receiving further comprises:
receiving (s301), by a Call Session Control Function, CSCF, the call request initiated by the terminal, wherein the session transfer identifier is used by the terminal as a called number; and
routing (S302), by the CSCF, the call request to the DTF according to the session transfer identifier.

2. The method of claim 1, wherein the step of initiating further comprises:
receiving (s801), by an Internet Protocol Multimedia Subsystem Circuit Switched Control Function, IMS CS Control Function, the call request initiated by the terminal in a circuit switched domain; and
writing (s804), by the IMS CS Control Function, the session transfer identifier in the call request and sending (s805) the call request to the CSCF.

3. The method of claim 2, wherein the writing the session transfer identifier in the call request comprises: writing the session transfer identifier in a Request Uniform Resource Identifier, Request URI, message header of the call request.

4. The method of claim 1, wherein the step of initiating further comprises:
initiating, by the terminal, the call request with the session transfer identifier as the called number in a packet switched domain.

5. The method of any one of claims 1-4, wherein:
when the terminal user is a circuit switched service user, the session transfer identifier comprises digits; when the terminal is an IMS centralized services user, or a packet switched service user, the session transfer identifier comprises digits and/or characters other than digits; and
the digits are a Telephone Uniform Resource Identifier, TEL URI, and the characters other than digits are a Session Initiation Protocol Uniform Resource Identifier, SIP URI.

6. The method of claim 1, wherein the transferring the session to another domain according to the session transfer identifier comprises:
exchanging, by the terminal and a peer terminal, media information via the DTF;
sending, by the DTF, media information of the peer terminal to a Media Gateway Control Function;
setting up a packet switched bearer between the peer terminal and a media gateway;
setting up a circuit switched bearer between the terminal and the media gateway; and
releasing a previous packet switched bearer.

7. The method of claim 1, wherein the allocating the session transfer identifier in advance comprises:
receiving (s401), by the CSCF a session request initiated by the terminal in a packet switched domain;
routing (s402), by the CSCF, the session request to the DTF, and by the DTF, identifying (s403) that the session request is intended to initiate a new session and allocating (s404) the session transfer identifier for the session; and
receiving, by the DTF, a response message returned by the peer terminal and sending (s405) the session transfer identifier to the terminal.

8. The method of claim 1, wherein the allocating the session transfer identifier in advance comprises:
receiving (s501), by the CSCF, a session request initiated by a peer terminal to the terminal;
routing (s502) , by the CSCF, the session request to the DTF, and by the DTF, identifying (s503) that the session request is intended to initiate a new session and allocating (s504) the session transfer identifier for the session; and
sending (s505), by the DTF, the session transfer identifier to the terminal.

9. The method of claim 7 or 8, wherein the sending the session transfer identifier to the terminal comprises:
writing the session transfer identifier in a Contact header of a Session Initiation Protocol, SIP, message and sending the SIP message to the terminal.

10. The method of claim 1, wherein the allocating the session transfer identifier in advance comprises:
initiating, by the terminal, a call request in a circuit switched domain to a peer terminal, whereupon the call request is routed to the DTF;
identifying, by the DTF, that the session request is intended to initiate a new session and allocating the session transfer identifier for the session; and
receiving, by the DTF, a response message returned by the peer terminal and sending the session transfer identifier to the terminal via an Internet Protocol Multimedia Subsystem Circuit Switched Control Function, IMS CS Control Function.

11. The method of claim 10, wherein
the sending the session transfer identifier to the terminal comprises: writing the session transfer identifier in a Contact header of a Session Initiation Protocol, SIP, message and sending the SIP message to the IMS CS Control Function; and
the sending the session transfer identifier to the terminal by the IMS CS Control Function comprises: resolving the session transfer identifier from the Contact header and sending the session transfer identifier to the terminal.

12. The method of claim 7, 8, or 10, wherein, after the sending the session transfer identifier to the terminal, the method further comprises:
storing (s406, s506), by the terminal, the session transfer identifier.

13. A domain transfer function, DTF, comprising:
a transceiver module, adapted to receive a call request, obtain a session transfer identifier carried in the call request for domain transfer of a multimedia session, and send an allocated session transfer identifier; and
a transfer management module, adapted to transfer the multimedia session between a circuit switched domain and a packet switched domain according to the session transfer identifier carried in the call request
wherein the received call request is:
received by a Call Session Control Function, CSCF, wherein the call request is initiated by a terminal (s301) and wherein the session transfer identifier is used by the terminal as a called number; and
routed (S302) by the CSCF to the DTF according to the session transfer identifier.

14. The DTF of claim 13, further comprising:
an analyzing module, adapted to analyze whether the multimedia session is a new session;
an allocating module, adapted to allocate a session transfer identifier for a new session to identify the session and domain transfer of the session; and
an identifying module, adapted to identify whether the call request carries a session transfer identifier.

15. The DTF of claim 13, further comprising:
a writing module, adapted to write the session transfer identifier allocated for the new session in a Contact header of a Session Initiation Protocol, SIP, message; and
a transceiver module, adapted to send the Contact header wherein the session transfer identifier is written.

16. The DTF of claim 13, further comprising:
a first storing module, adapted to store session transfer identifiers and
a second storing module, adapted to store a map between session transfer identifiers and multimedia session identifiers.

## Patentansprüche

1. Domänentransferverfahren, umfassend:
Empfangen (s301, s302) einer Anrufanforderung von einem Endgerät, wobei die Anforderung eine Sitzungstransferkennung führt, die im Voraus durch eine Domänentransferfunktion DTF zum Identifizieren einer Sitzung und zum Domänentransfer der Sitzung vergeben wurde; und
Transferieren (s303) der Sitzung durch die DTF zu einer anderen Domäne gemäß der Sitzungstransferkennung;
wobei der Schritt des Empfangens ferner Folgendes umfasst:
Empfangen (S301) der durch das Endgerät eingeleiteten Anrufanforderung durch eine Call Session Control Function CSCF, wobei die Sitzungstransferkennung von dem Endgerät als angerufene Nummer benutzt wird; und
Routen (s302) der Anrufanforderung durch die CSCF zu der DTF gemäß der Sitzungstransferkennung.

2. Verfahren nach Anspruch 1, wobei der Schritt des Einleitens ferner Folgendes umfasst:
Empfangen (s801) der durch das Endgerät eingeleiteten Anrufanforderung in einer leitungsvermittelten Domäne durch eine Internet Protocol Multimedia Subsystem Circuit Switched Control Function bzw. IMS CS Control Function; und
Schreiben (s804) der Sitzungstransferkennung durch die IMS CS Control Function in die Anrufanforderung und Senden (s805) der Anrufanforderung zu der CSCF.

3. Verfahren nach Anspruch 2, wobei das Schreiben der Sitzungstransferkennung in die Anrufanforderung Folgendes umfasst: Schreiben der Sitzungstransferkennung in einen Nachrichtenheader des Request Uniform Resource Identifier bzw. Request URI der Anrufanforderung.

4. Verfahren nach Anspruch 1, wobei der Schritt des Einleitens ferner Folgendes umfasst:
Einleiten der Anrufanforderung durch das Endgerät mit der Sitzungstransferkennung als die angerufene Nummer in einer paketvermittelten Domäne.

5. Verfahren nach einem der Ansprüche 1-4, wobei,
wenn der Endgerätebenutzer ein Benutzer des leitungsvermittelten Dienstes ist, die Sitzungstransferkennung Ziffern umfasst; wenn das Endgerät ein Benutzer der zentralisierten Dienste des IMS oder ein Benutzer des paketvermittelten Dienstes ist, die Sitzungstransferkennung Ziffern und/oder andere Zeichen als Ziffern umfasst; und
die Ziffern ein Telephone Uniform Resource Identifier TEL URI sind und die anderen Zeichen als Ziffern ein Session Initiation Protocol Uniform Resource Identifier SIP URI sind.

6. Verfahren nach Anspruch 1, wobei das Transferieren der Sitzung zu einer anderen Domäne gemäß der Sitzungstransferkennung Folgendes umfasst:
Austauschen von Medieninformationen durch das Endgerät und ein Peer-Endgerät über die DTF;
Senden von Medieninformationen des Peer-Endgeräts durch die DTF zu einer Media Gateway Control Function;
Aufbauen eines paketvermittelten Trägers zwischen dem Peer-Endgerät und einem Media Gateway;
Aufbauen eines leitungsvermittelten Trägers zwischen dem Endgerät und dem Media Gateway; und
Freigeben eines vorherigen paketvermittelten Trägers.

7. Verfahren nach Anspruch 1, wobei das Vergeben der Sitzungstransferkennung im Voraus Folgendes umfasst:
Empfangen (s401) einer durch das Endgerät eingeleiteten Sitzungsanforderung in einer paketvermittelten Domäne durch die CSCF;
Routen (s402) der Sitzungsanforderung durch die CSCF zu der DTF und
Identifizieren (s403) durch die DTF, dass die Sitzungsanforderung dafür bestimmt ist, eine neue Sitzung einzuleiten, und Vergeben (s404) der Sitzungstransferkennung für die Sitzung; und
Empfangen einer durch das Peer-Endgerät zurückgegebenen Antwortnachricht durch die DTF und Senden (s405) der Sitzungstransferkennung zu dem Endgerät.

8. Verfahren nach Anspruch 1, wobei das Vergeben der Sitzungstransferkennung im Voraus Folgendes umfasst:
Empfangen (s501) einer durch ein Peer-Endgerät für das Endgerät eingeleiteten Sitzungsanforderung durch die CSCF;
Routen (s502) der Sitzungsanforderung durch die CSCF zu der DTF und
Identifizieren (s503) durch die DTF, dass die Sitzungsanforderung dafür bestimmt ist, eine neue Sitzung einzuleiten, und Vergeben (s504) der Sitzungstransferkennung für die Sitzung; und
Senden (s505) der Sitzungstransferkennung durch die DTF zu dem Endgerät.

9. Verfahren nach Anspruch 7 oder 8, wobei das Senden der Sitzungstransferkennung zu dem Endgerät Folgendes umfasst:
Schreiben der Sitzungstransferkennung in einen Contact-Header einer Nachricht des Session Initiation Protocol SIP und Senden der SIP-Nachricht zu dem Endgerät.

10. Verfahren nach Anspruch 1, wobei das Vergeben der Sitzungstransferkennung im Voraus Folgendes umfasst:
Einleiten einer Anrufanforderung durch das Endgerät in einer leitungsvermittelten Domäne zu einem Peer-Endgerät, woraufhin die Anrufanforderung zu der DTF geroutet wird;
Identifizieren durch die DTF, dass die Sitzungsanforderung dafür bestimmt ist, eine neue Sitzung einzuleiten, und Vergeben der Sitzungstransferkennung für die Sitzung;
und
Empfangen einer durch das Peer-Endgerät zurückgegebenen Antwortnachricht durch die DTF und Senden der Sitzungstransferkennung zu dem Endgerät über eine Internet Protocol Multimedia Subsystem Circuit Switched Control Function bzw.
IMS CS Control Function.

11. Verfahren nach Anspruch 10, wobei
das Senden der Sitzungstransferkennung zu dem Endgerät Folgendes umfasst:
Schreiben der Sitzungstransferkennung in einen Contact-Header einer Nachricht des Session Initiation Protocol SIP und Senden der SIP-Nachricht zu der IMS CS Control Function; und
das Senden der Sitzungstransferkennung zu dem Endgerät durch die IMS CS Control Function Folgendes umfasst: Auflösen der Sitzungstransferkennung aus dem Contact-Header und Senden der Sitzungstransferkennung zu dem Endgerät.

12. Verfahren nach Anspruch 7, 8 oder 10, wobei das Verfahren nach dem Senden der Sitzungstransferkennung zu dem Endgerät ferner Folgendes umfasst:
Speichern (s406, s506) der Sitzungstransferkennung durch das Endgerät.

13. Domänentransferfunktion DTF, umfassend:
ein Sender-/Empfängermodul, das dafür ausgelegt ist, eine Anrufanforderung zu empfangen, eine in der Anrufanforderung geführte Sitzungstransferkennung für Domänentransfer einer Multimediasitzung zu erhalten und eine vergebene Sitzungstransferkennung zu senden; und
ein Transferverwaltungsmodul, das dafür ausgelegt ist, die Multimediasitzung zwischen einer leitungsvermittelten Domäne und einer paketvermittelten Domäne gemäß der in der Anrufanforderung geführten Sitzungstransferkennung zu transferieren,
wobei die empfangene Anrufanforderung
durch eine Call Session Control Function CSCF empfangen wird, wobei die Anrufanforderung durch ein Endgerät (s301) eingeleitet wird und wobei die Sitzungstransferkennung von dem Endgerät als angerufene Nummer benutzt wird; und
durch die CSCF zu der DTF gemäß der Sitzungstransferkennung geroutet wird (s302).

14. DTF nach Anspruch 13, ferner umfassend:
ein Analysemodul, das dafür ausgelegt ist, zu analysieren, ob die Multimediasitzung eine neue Sitzung ist;
ein Vergabemodul, das dafür ausgelegt ist, eine Sitzungstransferkennung für eine neue Sitzung zu vergeben, um die Sitzung zu identifizieren und zum Domänentransfer der Sitzung; und
ein Identifizierungsmodul, das dafür ausgelegt ist, zu identifizieren, ob die Anrufanforderung eine Sitzungstransferkennung führt.

15. DTF nach Anspruch 13, ferner umfassend:
ein Schreibmodul, das dafür ausgelegt ist, die für die neue Sitzung vergebene Sitzungstransferkennung in einen Contact-Header einer Nachricht des Session Initiation Protocol SIP zu schreiben; und
ein Sender-/Empfängermodul, das dafür ausgelegt ist, den Contact-Header, in den die Sitzungstransferkennung geschrieben ist, zu senden.

16. DTF nach Anspruch 13, ferner umfassend:
ein erstes Speichermodul, das dafür ausgelegt ist, Sitzungstransferkennungen zu speichern, und
ein zweites Speichermodul, das dafür ausgelegt ist, eine Abbildung zwischen Sitzungstransferkennungen und Multimediasitzungskennungen zu speichern.

## Revendications

1. Procédé de transfert de domaine, comprenant :
la réception (s301, s302) d'une requête d'appel depuis un terminal, la requête incluant un identifiant de transfert de session attribué à l'avance par une fonction de transfert de domaine, DTF, pour identifier une session et un transfert de domaine de la session ; et
le transfert (s303), par la DTF, de la session dans un autre domaine en fonction de l'identifiant de transfert de session ;
dans lequel l'étape de réception comprend en outre :
la réception (s301), par une Fonction de Commande de Session d'Appel, CSCF, de la requête d'appel lancée par le terminal, l'identifiant de transfert de session étant utilisé par le terminal en tant que numéro appelé ; et
le routage (S302), par la CSCF, de la requête d'appel à la DTF en fonction de l'identifiant de transfert de session.

2. Procédé selon la revendication 1, dans lequel l'étape de lancement comprend en outre
la réception, (s801), par une Fonction de Commande de Commutation de Circuits de Sous-système Multimédia à Protocole Internet, Fonction de Commande IMS CS, de la requête d'appel lancée par le terminal dans un domaine à commutation de circuits ; et
l'écriture (s804), par la Fonction de Commande IMS CS, de l'identifiant de transfert de session dans la requête d'appel et l'envoi (s805) de la requête d'appel à la CSCF.

3. Procédé selon la revendication 2, dans lequel l'écriture de l'identifiant de transfert de session dans la requête d'appel comprend : l'écriture de l'identifiant de transfert de session dans un en-tête de message d'Identifiant de Ressources Uniformes de Requête, Request URI, de la requête d'appel.

4. Procédé selon la revendication 1, dans lequel l'étape de lancement comprend en outre
le lancement, par le terminal, de la requête d'appel avec l'identifiant de transfert de session comme numéro appelé dans un domaine à commutation de paquets.

5. Procédé selon l'une quelconque des revendications 1 à 4, dans lequel :
quand l'utilisateur du terminal est un utilisateur d'un service à commutation de circuits, l'identifiant de transfert de session comprend des chiffres ; quand le terminal est un utilisateur de services centralisés IMS, ou un utilisateur d'un service à commutation de paquets, l'identifiant de transfert de session comprend des chiffres et/ou des caractères autres que des chiffres ; et
les chiffres sont un Identifiant de Ressources Uniformes Téléphoniques, TEL URI, et
les caractères autres que les chiffres sont un Identifiant de Ressources Uniformes de Protocole de Lancement de Session, SIP URI.

6. Procédé selon la revendication 1, dans lequel le transfert de la session dans un autre domaine selon l'identifiant de transfert de session comprend :
l'échange, par le terminal et un terminal homologue, d'informations multimédia par l'intermédiaire de la DTF ;
l'envoi, par le DTF, d'informations multimédia du terminal homologue à une Fonction de Commande de Passerelle Multimédia ;
l'établissement d'un support à commutation de paquets entre le terminal homologue et
une passerelle multimédia ;
l'établissement d'un support à commutation de circuits entre le terminal et la passerelle multimédia ; et
la libération d'un support à commutation de paquets antérieur.

7. Procédé selon la revendication 1, dans lequel l'attribution à l'avance de l'identifiant de transfert de session comprend :
la réception (s401), par la CSCF, d'une requête de session lancée par le terminal dans un domaine à commutation de paquets ;
le routage (s402), par la CSCF, de la requête de session jusqu'à la DTF, et par la DTF, l'identification (s403) que la requête de session vise à lancer une nouvelle session et l'attribution (s404) de l'identifiant de transfert de session à la session ; et
la réception, par la DTF, d'un message de réponse renvoyé par le terminal homologue et l'envoi (s405) de l'identifiant de transfert de session au terminal.

8. Terminal selon la revendication 1, dans lequel l'attribution à l'avance de l'identifiant de transfert de session comprend :
la réception (s501), par la CSCF, d'une requête de session lancée par un terminal homologue auprès du terminal ;
le routage (s502), par la CSCF, de la requête de session jusqu'à la DTF, et par la DTF, l'identification (s503) que la requête de session vise à lancer une nouvelle session et l'attribution (s504) de l'identifiant de transfert de session à la session ; et l'envoi (s505), par la DTF, de l'identifiant de transfert de session au terminal.

9. Procédé selon la revendication 7 ou 8, dans lequel l'envoi de l'identifiant de transfert de session au terminal comprend :
l'écriture de l'identifiant de transfert de session dans un en-tête de Contact d'un message de Protocole de Lancement de Session, SIP, et l'envoi du message SIP au terminal.

10. Procédé selon la revendication 1, dans lequel l'attribution à l'avance de l'identifiant de transfert de session comprend :
le lancement, par le terminal, d'une requête d'appel dans un domaine à commutation de paquets auprès d'un terminal homologue, sur quoi la requête d'appel est routée jusqu'à la DTF ;
l'identification, par la DTF, que la requête de session vise à lancer une nouvelle session et l'attribution de l'identifiant de transfert de session à la session ; et
la réception, par la DTF, d'un message de réponse renvoyé par le terminal homologue et l'envoi de l'identifiant de transfert de session au terminal par l'intermédiaire d'une Fonction de Commande de Commutation de Circuits de Sous-Système Multimédia à Protocole Internet, Fonction de Commande IMS CS.

11. Procédé selon la revendication 10, dans lequel
l'envoi de l'identifiant de transfert de session au terminal comprend : l'écriture de l'identifiant de transfert de session dans un en-tête de Contact d'un message de Protocole de Lancement de Session, SIP, et l'envoi du message SIP à la Fonction de Commande IMS CS ; et
l'envoi de l'identifiant de transfert de session au terminal par la Fonction de Commande IMS CS comprend : la résolution de l'identifiant de transfert de session à partir de l'en-tête de Contact et l'envoi de l'identifiant de transfert de session au terminal.

12. Procédé selon la revendication 7, 8 ou 10, comprenant en outre, après l'envoi de l'identifiant de transfert de session au terminal :
la mémorisation (s406, s506), par le terminal, de l'identifiant de transfert de session.

13. Fonction de transfert de domaine, DTF, comprenant :
un module d'émetteur-récepteur, adapté pour recevoir une requête d'appel, obtenir un identifiant de transfert de session inclus dans la requête d'appel pour le transfert de domaine d'une session multimédia, et envoyer un identifiant de transfert de session attribué ; et
un module de gestion de transfert, adapté pour transférer la session multimédia entre un domaine à commutation de circuits et un domaine à commutation de paquets en fonction de l'identifiant de transfert de session inclus dans la requête d'appel dans lequel la requête d'appel reçue est :
reçue par une Fonction de Commande de Session d'Appel, CSCF, la requête d'appel étant lancée par un terminal (s301), et l'identifiant de transfert de session étant utilisé par le terminal en tant que numéro appelé ; et
routée (S302), par la CSCF à la DTF en fonction de l'identifiant de transfert de session.

14. DTF selon la revendication 13, comprenant en outre :
un module d'analyse, adapté pour analyser si la session multimédia est ou non une nouvelle session ;
un module d'attribution, adapté pour attribuer un identifiant de transfert de session d'une nouvelle session afin d'identifier la session et le transfert de domaine de la session ; et
un module d'identification, adapté pour identifier si la requête d'appel inclut ou non un identifiant de transfert de session.

15. DTF selon la revendication 13, comprenant en outre :
un module d'écriture, adapté pour écrire l'identifiant de transfert de session attribué à la nouvelle session dans un en-tête de Contact d'un message de Protocole de Lancement de Session, SIP ; et
un module d'émetteur-récepteur, adapté pour envoyer l'en-tête de Contact dans lequel l'identifiant de transfert de session est écrit.

16. DTF selon la revendication 13, comprenant en outre :
un premier module de mémorisation, adapté pour mémoriser des identifiants de transfert de session ; et
un second module de mémorisation, adapté pour mémoriser une carte entre les identifiants de transfert de session et les identifiants de session multimédia.
